# EUROPÄISCHE PATENTSCHRIFT

(11) **EP 1 673 264 B1**
(45) Veröffentlichungstag und Bekanntmachung des Hinweises auf die Patenterteilung: **27.05.2020**
(21) Anmeldenummer: 04786824.5
(22) Anmeldetag: 23.09.2004
(51) Int. Cl.: B60S 1/40

(54) **VORRICHTUNG ZUM VERBINDEN EINES WISCHBLATTS MIT EINEM WISCHERARM**
DEVICE FOR CONNECTING A WIPER BLADE TO A WIPER ARM
DISPOSITIF DE CONNEXION D'UN BALAI D'ESSUIE-GLACE A UN BRAS D'ESSUIE-GLACE

(30) Priorität: 09.10.2003 DE 10347637
(43) Veröffentlichungstag der Anmeldung: 28.06.2006
(73) Patentinhaber: Robert Bosch GmbH, 70442 Stuttgart (DE)
(72) Erfinder: WINDMOLDERS, Eric, 3510 Kermt (BE); BEELEN, Hans, 3540 Herk de Stad (BE); VAN BEALEN, David, 3020 Herent (BE)
(86) Internationale Anmeldenummer: PCT/DE2004/002107
(87) Internationale Veröffentlichungsnummer: WO 2005/039944

(56) Entgegenhaltungen:
- EP-A- 0 267 010
- WO-A-02/40328
- WO-A-03/084789
- DE-A1- 10 326 266
- US-A- 4 418 441

## Beschreibung

Die Erfindung betrifft eine Vorrichtung zum Verbinden eines Wischblatts mit einem Wischerarm. Bei einer bekannten derartigen Vorrichtung (WO 02/40328 A1) ist ein Verbindungsstück in einer wischblattseitigen Kupplungshälfte gelenkig angeordnet, die U-förmig ausgestaltet ist und das Verbindungsstück seitlich umgreift. Das Verbindungsstück weist ein Rastelement auf, mit dem es mit einem Gegenrastelement des Wischerarms in montierter Stellung korrespondiert. In dieser Stellung übergreift der Wischerarm sowohl das Verbindungsstück als auch die wischblattseitige Kupplungshälfte und liegt damit mit seiner Innenseite direkt an der wischblattseitigen Kupplungshälfte an. Die Relativbewegung zwischen dem Wischerarm und dem Wischblatt während des Wischens über die Scheibe findet damit zwischen der Innenseite des Wischerarms und der Außenseite der wischblattseitigen Kupplungshälfte statt. Da diese beiden Teile in aller Regel aus Metall gefertigt sind, müssen zusätzliche reibungs- und korrosionshemmende Maßnahmen getroffen werden.

### Vorteile der Erfindung

Die Vorrichtung zum Verbinden eines Wischblatts mit einem Wischerarm nach den unabhängigen Ansprüchen hat den Vorteil, dass keine Relativbewegung zwischen zwei aus Metall bestehenden Teilen während eines Wischvorgangs stattfindet. Das Verbindungsstück kann aus Kunststoff oder einem anderen korrosionsresidenten Material bestehen, so dass über die gesamte Lebenszeit des Wischblatts Korrosion oder übertriebener Abrieb, der unter Umständen zu einem Verklemmen führen kann, vermieden ist. Durch die besondere Anordnung der Rastmittel und Gegenrastmittel sowie der unterschiedlichen Abstützflächen und Gegenabstützflächen ergibt sich darüber hinaus gegenüber dem bekannten Stand der Technik eine sehr einfache Montage und Demontage zwischen Wischblatt und Wischerarm. Die Montage erfolgt durch ein einfaches, in der Regel senkrechtes Eindrücken des Wischblatts von unten in den Wischerarm, während zur Demontage lediglich ein Rastmittel betätigt und das Wischblatt entlang des Wischerarms nach außen gezogen werden kann. Die senkrechte Montage bietet den Vorteil, dass selbst bei unvollständigem Eindrücken des Wischblatts in den Wischerarm durch den Endverbraucher das anschließende Anlegen des Wischblatts auf die Scheibe und damit das Einwirken der durch den Wischerarm auf das Wischblatt ausgeübten Belastung die Montage vollends abschließt, sodass die Rastmittel und Gegenrastmittel sicher verrastet sind.

Weist das Wischblatt eine Halterung auf, an deren Längsseiten erste Gelenkmittel angeordnet sind und die vom Verbindungsstück übergriffen wird, kann sichergestellt werden, dass die Gelenkachse innerhalb des Verbindungsstücks verbleibt und ein Kontakt zu den Innenseiten des Wischerarms ausgeschlossen ist. Ferner findet die Drehbewegung zwischen dem metallischen Gelenkmittel des Wischblatts und den Gelenkmitteln des Verbindungsstücks nicht zwischen zwei Metallteilen statt. Damit ist Verschleiß und Korrosion im späteren Betrieb unter den unterschiedlichsten Witterungsbedingungen weitgehend vermieden. Ferner kann durch die besondere Anordnung erreicht werden, dass zwischen den Innenseiten des Verbindungsstücks und dessen Rastmitteln einen Freiraum verbleibt, sodass die Rastmittel problemlos eine kleine zur Verrastung aber notwendige Bewegung ausführen können.

Besonders einfach lässt sich das Verbindungsstück am Wischblatt befestigen, wenn hierfür dritte Rastmittel vorgesehenen sind, durch die es möglich wird, das Verbindungsstück selbst durch einfaches Aufdrücken auf das Wischblatt bzw. auf eine Halterung des Wischblatts aufzuclipsen. Diese sind bevorzugt von den ersten Rastmitteln getrennt, sodass die Gelenkmittel beim späteren Vereinigen von Wischblatt und Wischerarm und deren Verrasten nicht belastet werden.

Weisen die Rastmitteln Anlaufschrägen auf, kann das Verrasten durch Druck in Richtung der Montagebewegung erfolgen und muss nicht über weitere Mechanismen eingeleitet werden.

Sind die Rastmittel in einer Vertiefung der mindestens ersten Abstützfläche angeordnet, ist gewährleistet, dass die ersten Rastmittel vom Wischerarm in zusammengebautem Zustand abgedeckt und geschützt werden und damit nicht versehentlich auszulösen sind. Die direkt der Sicherung des Wischblatts während dessen Betriebs. Die dritten Rastmittel können in einer separaten Nut angeordnet sein und sind somit während der Montage des Wischblatts an den Wischerarm nicht versehentlich betätigbar. Auf diese Weise werden die Gelenkmittel während der Montage des Wischblatts nicht unnötig belastet.

Eine hochwirksame Montagesicherung ist gegeben, wenn die ersten Gegenrastmittel zumindest während der Montage des Wischblatts und des Wischerarms passgenau durch eine Vertiefung führbar sind. Damit ist gewährleistet, dass die relative Position des Wischblatts zum Wischerarm exakt eingehalten wird und somit die Rastmittel und Gegenrastmittel auch tatsächlich zum Eingriff gelangen. Ohne eine derartige Führung kann insbesondere bei Nacht oder ungünstigen Sichtverhältnissen die Montage auf Grund einer falschen Positionierung nur unvollständig erfolgen.

Ist die erste Abstützfläche in Richtung auf das Wischblatt zu so begrenzt, dass die Gegenrastmittel darunter durch führbar sind, kann das Wischblatt einfach vom Wischerarm entfernt werden.

Für einen sicheren Betrieb ist es notwendig, dass sich das Wischblatt während der Wischbewegung nicht vom Wischerarm löst. Diese Sicherung wird in erster Linie durch die zweiten Rastmittel und Gegenrastmittel erreicht. Insbesondere, wenn die zweiten Rastmittel federnd ausgelegt sind, was für eine einfache Demontage von Vorteil ist, muss die Feder sehr steif ausgelegt sein, um dem durch die Fliehkraft ausgelösten Druck auf das Rastelement Stand zuhalten. Diese Kraft wirkt zwar nicht direkt in Federrichtung, kann aber Kraftkomponenten enthalten, die das Rastmittel zu lösen versuchen. Durch eine entsprechende Ausgestaltungen der Rastmitteln und Gegenrastmittel kann ein formschlüssiger Verbund kreiert werden, der unabhängig von den auftretenden Kräften die Rastmittel und Gegenrastmittel zueinander sichert. Eine sehr einfache Möglichkeit besteht darin, am zweiten Rastmittel eine Hinterschneidung vorzusehen, die mit einer Schräge am zweiten Gegenrastmittel korrespondiert. Dabei sind die Hinterschneidung und die Schräge so angeordnet, dass das zweite Rastelement durch die auf das Wischblatt wirkende Fliehkraft entgegen der Richtung, in der es entriegelt, belastet wird.

### Zeichnungen

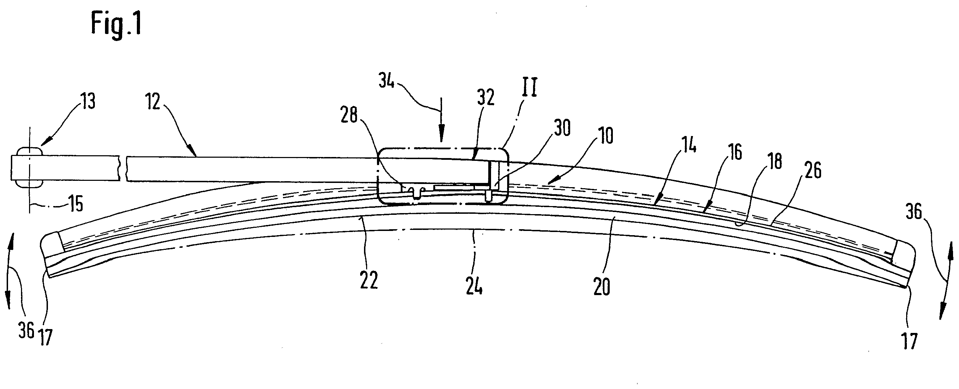

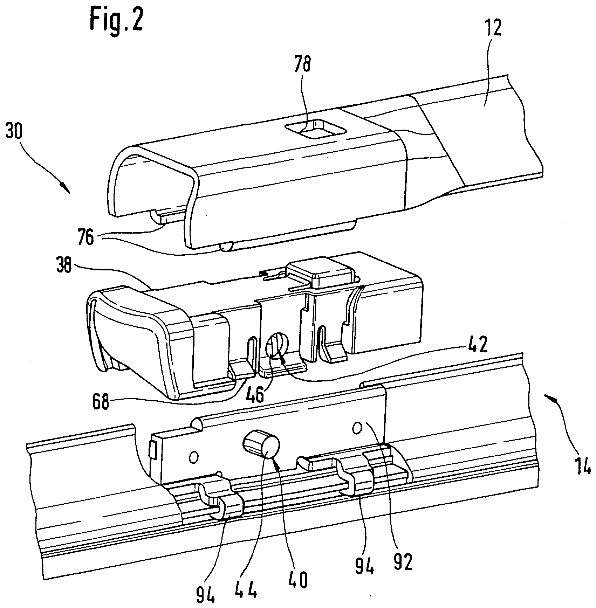

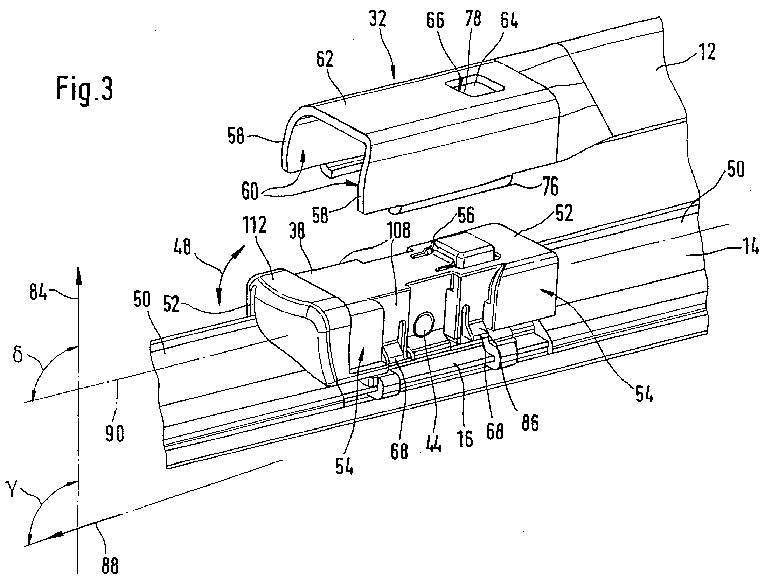

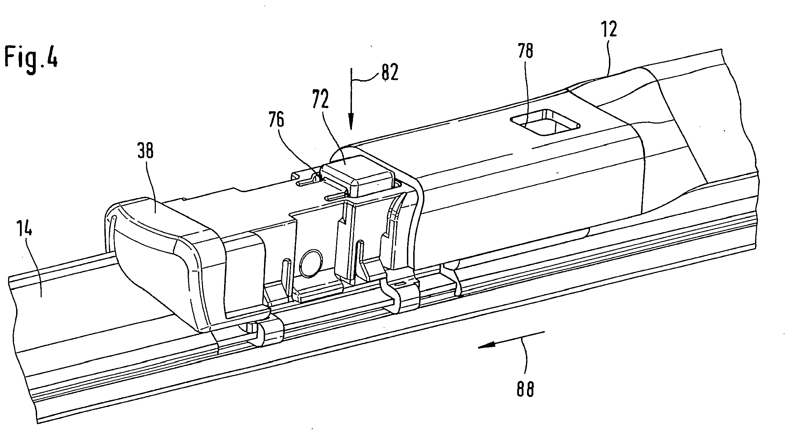

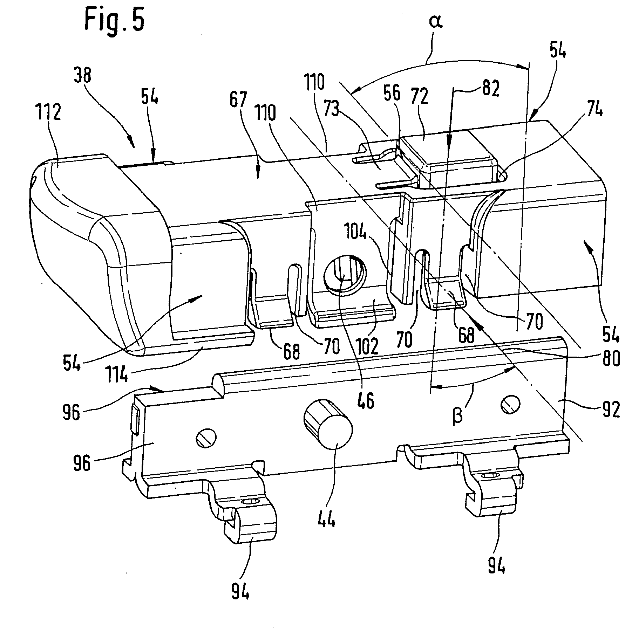

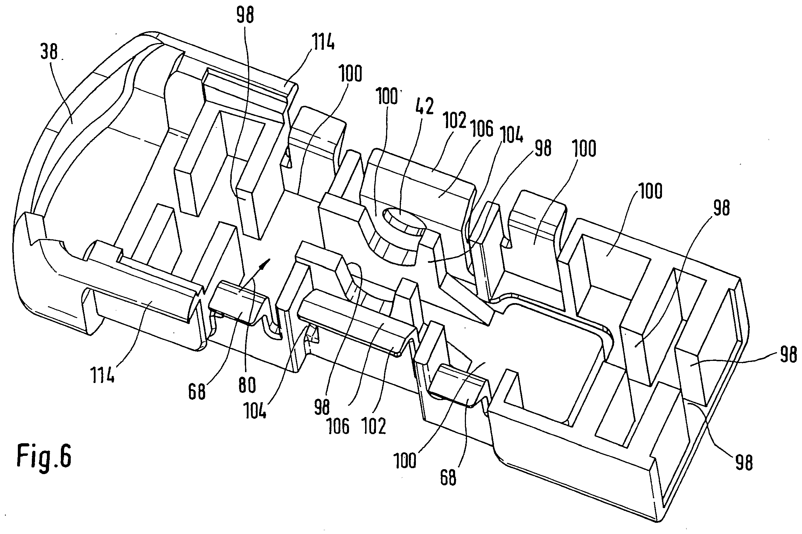

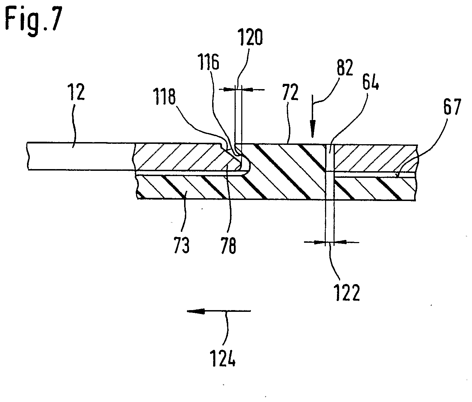

In der Zeichnung ist ein Ausführungsbeispiel der erfindungsgemäßen Vorrichtung zum Verbinden eines Wischblatts mit einem Wischerarm sowie ein Wischblatt als auch ein Wischerarm und ein entsprechendes Verbindungsstück dargestellt und in der nachfolgenden Beschreibung näher erläutert. Es zeigen Figur 1 einen Wischhebel in Seitenansicht, Figur 2 eine Vergrößerung der Einzelheit II in Figur 1 in Explosionsdarstellung, Figur 3 die Einzelheit nach Figur 2 teilweise montiert, Figur 4 die Einzelheit nach Figur 2 in einer teilweise demontierten Position, Figur 5 ein Verbindungsstück und eine Halterung in vergrößerter Schrägdarstellung, Figur 6 das Verbindungsstück in einer Darstellung von schräg unten und Figur 7 einen Schnitt durch die zweiten Rastmittel und zweiten Gegenrastmittel in zusammengebauter Position.

### Beschreibung

In Figur 1 ist in Seitenansicht eine Wischhebel 10 dargestellt, zu dem ein angetriebener Wischerarm 12 und ein mit diesem gelenkig verbundenes Wischblatt 14 gehören. Der Wischerarm 12 ist an seinem einen Ende 13 mit einer nicht dargestellten Pendel-Antriebsvorrichtung verbunden, deren Pendelachse mit der Bezugszahl 15 versehen ist. An dem anderen, freien Ende des Wischerarms 12 ist das Wischblatt 14 angelenkt. Es weist ein federelastisches, bandartig langgestrecktes, ein- oder mehrteiliges Tragelement 16 auf, an dessen von dem Wischerarm abgewandten unteren Bandseite 18 eine langgestreckte, gummielastische Wischleiste 20 längsachsenparallel angeordnet ist. Das Wischblatt 14 ist mit einer an der Wischleiste 20 vorhandenen Wischlippe 22 an der Oberfläche 24 der zu wischenden Scheibe anlegbar. In Figur 1 ist die Oberfläche 24 dieser Scheibe als strichpunktierte Linie eingezeichnet. Es handelt sich dabei um die in aller Regel sphärisch gekrümmte Windschutzscheibe eines Kraftfahrzeuges. An der von dieser Scheibenoberfläche 24 abgewandten oberen Bandseite 26 des Tragelements 16 ist das Wischblatt 14 mit der wischblattseitigen Kupplungshälfte 28 einer Verbindungsvorrichtung 30 versehen, welche mit einer am freien Ende des Wischerarms 12 ausgebildeten wischerarmseitigen Kupplungshälfte 32 zusammenarbeitet. Wie aus Figur 1 weiter ersichtlich ist, hat das noch nicht an der Scheibe angelegte, gekrümmte Wischblatt 14 eine stärkere Krümmung als die Scheibenoberfläche 24. Da die Linie 24 die stärkste Krümmung der Scheibenoberfläche darstellen soll ist klar ersichtlich, dass die Krümmung des mit seinen beiden Enden 17 an der Scheibe anliegenden, noch unbelasteten Wischblatts 14 stärker ist als die maximale Scheibenkrümmung. Unter einem über dem Wischerarm 12 ausgeübten, in Richtung des Pfeiles 34 (Figur 1) wirkenden Anpressdrucks legt sich das Wischblatt 14 mit seiner Wischleiste beziehungsweise mit deren Wischlippe 22 über ihre gesamte Länge an der Scheibenoberfläche 24 an. Dabei baut sich im aus Metall gefertigten, federelastischen Tragelement 16 eine Spannung auf, welche für eine ordnungsgemäße Anlage der Wischleiste 20 über deren gesamte Länge an der Scheibe 24 sorgt. Weil die in aller Regel sphärisch gekrümmte Scheibe nicht einen Abschnitt einer Kugeloberfläche darstellt, muß sich das Wischblatt 14 gegenüber dem Wischerarm 12 während seiner Wischbewegung ständig der jeweiligen Lage und dem Verlauf der Scheibenoberfläche anpassen können. Deshalb ist die eine Schwingbewegung (Doppelpfeil 36) ermöglichende, leicht gängige Gelenkverbindung zwischen dem Wischerarm 12 und dem Wischblatt 14 notwendig.

In Figur 2 sind der Wischerarm 12 und das Wischblatt 14 in einer Explosionsdarstellung gezeigt. Es ist erkennbar, dass zwischen dem Wischerarm 12 und dem Wischblatt 14 ein Verbindungsstück 38 angeordnet ist, das mit ersten Gelenkmitteln 40 des Wischblatts 14 korrespondierende zweite Gelenkmittel 42 aufweist. In diesem Fall sind die ersten Gelenkmitteln 40 als eine fest dem Wischblatt verankerte Gelenkachse 44 und die zweiten Gelenkmittel 42 als eine Lageröffnung 46 ausgeführt. In Zusammenbaustellung (Figur 3) greift die Gelenkachse 44 in die Lageröffnung 46 und stellt eine gelenkige Verbindung zwischen dem Wischblatt 14 und dem Verbindungsstück 38 her. Das Verbindungsstück 38 lässt sich um die Gelenkachse 44 in Richtung des Doppelpfeils 48 verschwenken. Da das Verbindungsstück 38 auch eine auf dem Tragelement 16 angeordnete Windabweisleiste 50 übergreift, sind vergrößerte Einschnitte 52 vorgesehenen die das Verkippen des Verbindungsstücks 38 um einen bestimmten Betrag ermöglichen.

Das Verbindungsstück 38 trägt erste Abstützflächen 54, die in diesem Fall parallel zueinander ausgerichtet sind und die seitliche Begrenzungen des Verbindungsstücks 38 darstellen (Figur 5). Eine zweite Abstützfläche 56 ist an einer Oberseite 67 des Verbindungsstücks 38 angeformt.

Der Wischerarm 12 ist im Bereich der wischerarmseitigen Kupplungshälfte 32 U-förmig gehalten, dessen beide Schenkel 58 auf das Wischblatt 14 zuweisen, während dessen U-Basis 62 in Zusammenbaustellung auf dem Verbindungsstück 38 zu liegen kommt (Figur 3). An der Innenseite der Schenkel 58 sind erste Gegenabstützflächen 60 ausgebildet, die in Zusammenbaustellung mit den ersten Abstützflächen 54 des Verbindungsstücks 38 korrespondieren. Das heißt, dass die ersten Gegenabstützflächen 60 in Zusammenbaustellung an den ersten Abstützflächen 54 anliegen und lediglich ein für die Montage und der Demontage notwendiges Spiel verbleibt.

In der U-Basis 62 ist eine Aussparung 64 vorgesehenen, deren Randbegrenzung eine zweite Gegenabstützfläche 66 bildet. In Zusammenbaustellung liegt dieser zweite Gegenabstützfläche 66 an der zweiten Abstützfläche 56 des Verbindungsstücks 38 an.

Da die zweite Abstützfläche 56 an einer Oberseite 67 des Verbindungsstücks 38 angeordnet ist, während die ersten Abstützflächen 54 Seitenwände des Verbindungsstücks 38 darstellen, ist klar ersichtlich, dass sich die Abstützflächen unter einem Winkel Alpha schneiden, der in diesem Fall 90 Grad beträgt. Je nach Ausführungsbeispiel, insbesondere wenn die ersten Abstützflächen 54 nicht parallel zueinander angeordnet sind, kann der Winkel Alpha auch von 90 Grad verschieden sein.

Das Verbindungsstück 38 trägt erste Rastmittel 68. Diese sind durch Einschnitte 70 seitlich begrenzt und zungenförmig federnd ausgestaltet. An seiner Oberseite 67 ist ein zweites Rastmittel 72 angeordnet, das seinerseits durch einen einen federnden Abschnitt 73 erzeugenden Freischnitt 74 ausgebildet ist. Den ersten Rastmitteln 68 stehend erste Gegenrastmittel 76 am Wischerarm 12 gegenüber, während den zweiten Rastmittel 72 zweite Gegenrastmittel 78 am Wischerarm 12 zugeordnet sind. In diesem Ausführungsbeispiel werden die zweiten Gegenrastmittel 78 durch die zweite Gegenabstützfläche 66 gebildet.

Durch den zungenförmigen Aufbau der ersten Rastmittel 68 sowie durch den federnden Abschnitt 73 der zweiten Rastmittel 72 sind diese Rastmittel bewegbar ausgebildet. Die Bewegungsrichtung 80 der ersten Rastmittel 68 und die Bewegungsrichtung 82 der zweiten Rastmittel 72 schließen, wenn sie in eine Ebene projiziert werden einen Winkel Beta ein, der im Ausführungsbeispiel 90 Grad beträgt. Die Projektion erfolgt sinnvollerweise entlang einer senkrechten zu beiden Bewegungsrichtungen 80, 82.

Bei der Montage des Wischblatts 14 und des Wischerarms 12 wird das Wischblatt 14 in Pfeilrichtung 84 auf den Wischerarm zubewegt, wodurch die ersten Rastmitteln 68 mit einer angeformten Anlaufschräge 86 mit den ersten Gegenrastmittel 76 in Kontakt treten, federnd auslenken und bei weiterem Vordringen in Pfeilrichtung 84 letztlich in der Zusammenbaustellung hinter den ersten Gegenrastmittel 76 einrasten bzw. mit diesen verrasten.

Zur Demontage (Figur 4) werden die zweiten Rastmitteln 72 in der Richtung 82 betätigt und somit in Bewegungsrichtung 82 federnd ausgelenkt, so dass die Aussparung 64 und damit die zweiten Gegenrastmittel 78 freigegeben werden und das Wischblatt 14 in seiner Pfeilrichtung 88 aus dem Wischerarm 12 herausgezogen werden kann. Damit stehen die in Pfeilrichtung 84 erfolgende Montagerichtung und die in Pfeilrichtung 88 erfolgende Demontagerichtung unter einem Winkel Gamma zueinander, der im Ausführungsbeispiel 90 Grad beträgt.

Die in Pfeilrichtung 84 weisende Montagerichtung bildet mit einer sich entlang des Tragelements 16 zumindest im Bereich des Verbindungsstücks 38 erstreckenden Achse 90 einen Winkel Delta, der größer ist als Null Grad und im Ausführungsbeispiel unter 90 Grad erfolgt. Wie bereits eingangs erwähnt, wird dadurch erreicht, dass der vom Wischerarm 12 auf das Wischblatt 14 ausgeübte Arbeitsdruck das Wischblatt 12 in seine endgültige Zusammenbaustellung treibt.

Wie insbesondere in den Figuren 2 und 5 dargestellt, weist das Wischblatt 12 eine Halterung 92 auf, die über Krallen 94 am Tragelement befestigt ist. Die Halterung 32 selbst erstreckt sich annähernd senkrecht zum Tragelement 12 und besitzt Längsseiten 96, an denen die ersten Gelenkmittel 40, d. h. die Gelenkachse 44 angeordnet ist. Das Verbindungsstück 38 übergreift in Zusammenbaustellung die Halterung 92 (Figur 3) und liegt mit Innenseiten 98 an den Längsseiten 96 zumindest bereichweise an (Figur 6).

Die Innenseiten 98 sind, wie dies in Figur 6 zu sehen ist, nicht als durchgängige Wand ausgebildet sondern als Wandbereiche sowie einzelne Stege. Durch diese Aufbrechung entstehen Freiräume 100, die insbesondere hinter den ersten Rastmitteln 68 angeordnet sind, sodass deren Auslenkung in Bewegungsrichtung 80 ermöglicht ist.

In Figur 6 ist ferner gut zuerkennen, dass das Verbindungsstück 38 dritte Rastmittel 102 aufweist, in denen die Lageröffnung 46 eingebracht ist, sodass diese dritte Rastmittel 102 die zweiten Gelenkmittel 42 umfassen. Die dritten Rastmittel 102 sind ebenfalls durch Einschnitte 104 als federnden Zungen ausgebildet. Die dritten Rastmittel 102 weisen Anlaufschrägen 106 auf, die bezogen auf das Verbindungsstück 38 in dessen Innenraum weisen und die es ermöglichen, das Verbindungsstück 38 durch einfaches Aufdrücken auf die Halterung 92 zu montieren. Dabei gelangen die Anlaufschrägen 106 an der Gelenkachse 44 zur Anlage, werden durch die Schrägen ausgelenkt und federnd zurück, wenn die Gelenkachse 44 die Lageröffnung 46 erreicht hat. Die Anlaufschrägen 106 weisen damit in entgegengesetzten Richtung zu den Anlaufschrägen 86 der ersten Rastmittel 68.

Die erste Abstützflächen 54 weisen eine Vertiefung 108 auf, in der die ersten Rastmitteln 68 angeordnet sind. In Zusammenbaustellung (Figur 1) übergreift der Wischerarm 12 die Vertiefungen 108 und überdeckt damit die ersten Rastelemente 68. Innerhalb der Vertiefungen 108 ist jeweils eine Nut 110 eingelassen, in dessen Nutgrund die dritten Rastmittel 102 angeordnet sind. Damit sind die dritten Rastmittel 102 zu den ersten Rastmitteln 68 nach hinten versetzt angeordnet und damit relativ zu diesen noch stärker geschützt. Dadurch wird die Lagerung der Gelenkachse 44 in der Lageröffnung 46 nicht belastet, während das Wischblatt 14 an den Wischerarm 12 montiert wird.

Die ersten Gegenrastmittel 76 und die Vertiefungen 108 sind in Länge und Tiefe aufeinander abgestimmt. Das heißt, dass zur Montage die Vertiefungen 108 exakt unter den ersten Gegenrastmitteln 76 positioniert werden müssen, da diese sonst an der Oberseite 67 des Verbindungsstücks 38 anstoßen. Die weitere Montage in Pfeilrichtung 84 erfolgt dann geführt, weil die seitlichen Begrenzungen der Vertiefungen 108 an den ersten Gegenrastmitteln 76 entlanggeführt werden müssen. Dadurch ist gewährleistet, dass sowohl die ersten Rastmittel 68 als auch die zweiten Rastmittel 72 ihre für eine sichere Montage notwendige Endposition gewiss erreichen. Um ein gewisses Spiel bei der Positionierung zuzulassen, sind die seitlichen Begrenzungen der Vertiefungen 108 in Richtung auf die Oberseite 67 angeschrägt.

Am Verbindungsstück 38 ist ein Kopf 112 angeformt, der in Zusammenbaustellung die Außenkontur des Wischerarms aufnimmt und zu einem ästhetischen Abschluss bringt. Dazu ist der Kopf 112 im Bereich der ersten Abstützflächen 54 durch eine Schiene 114 verlängert, die bis zum Bereich der Vertiefungen 108 reicht. Auf der dem Kopf 112 gegenüberliegenden Seite des Verbindungsstücks 38 sind die ersten Abstützflächen 54 nicht mit einer solchen Schiene versehen. Im Gegenteil, dieser Bereich ist ausgespart, sodass die ersten Gegenrastmittel 76 diesen Bereich passieren können, wenn das Wischblatt 14 zur Demontage in seiner Richtung 88 bewegt wird.

In Figur 7 ist ein Teilschnitt durch den Wischerarm 12 im Bereich der Aussparung 64 und der zweiten Rastmitteln 72 zu sehen. Es ist erkennbar, dass das zweite Rastmittel 72 eine Hinterschneidung 116 aufweist die mit einer Schräge 118 der zweiten Gegenrastmittel 78 korrespondiert. Die Hinterschneidung 116 und die Schräge 118 überlappen sich maximal über eine Länge 120, die in dem freien Raum 122 zwischen dem Ende des zweiten Rastmittels 72 und der Aussparung 64 verbleibt. Damit ist gewährleistet, dass das zweite Rastmittel 72 durch die Aussparung 64 geführt werden kann.

Wird der Wischhebel 10 während des Betriebs pendelnd bewegt, wirkten auf das Wischblatt die Fliehkraft 124. Durch die spezielle Ausgestaltung der Hinterschneidung 116 ergibt sich damit eine Kraftkomponente, die einem versehentlichen Auslenken in Bewegungsrichtung 82 entgegensteht.

## Patentansprüche

1. Vorrichtung zum Verbinden eines Wischblatts (14) mit einem Wischerarm (12) mit folgenden Merkmalen:
- ein Verbindungsstück (38) kann auf ersten Gelenkmitteln (40) des Wischblatts (14) gelenkig angeordnet sein,
- das Verbindungsstück (38) trägt zweite Gelenkmittel (42) die mit den ersten Gelenkmitteln (40) korrespondieren,
- das Verbindungsstück (38) trägt mindestens erste und zweite Abstützflächen (54, 56) die mit mindestens ersten und zweiten Gegenabstützflächen (60,66) des Wischerarms (12) korrespondieren,
- die mindestens erste Abstützfläche (54) ist unter einem Winkel Alpha zur mindestens zweiten Abstützfläche (56) orientiert, der von 0° verschieden ist,
- das Verbindungsstück (38) trägt erste und zweite Rastmittel (68,72), die mit ersten und zweiten Gegenrastmitteln (76, 78) des Wischerarms (12) korrespondieren,
- mindestens ein erstes Rastmittel (68) und/oder erstes Gegenrastmittel (76) ist bzw. sind auslenkbar,
- mindestens ein zweites Rastmittel (72) und/oder ein zweites Gegenrastmittel (78) ist/sind auslenkbar,
- die Auslenkungsrichtung der ersten Rastmittel (68) bzw. ersten Gegenrastmittel (76) stehen unter einem Winkel Beta zur Auslenkungsrichtung der zweiten Rastmitteln (72) bzw. Gegenrastmitteln (78), der 90° beträgt.

2. Vorrichtung nach einem der vorhergehenden Ansprüche, **dadurch gekennzeichnet, dass** die Montage des Wischblatt (14) unter einer Montagerichtung und die Demontage unter Demontagerichtung erfolgt, die zueinander unter einem Winkel Gamma stehen, der von 0° verschieden ist.

3. Vorrichtung nach einem der vorhergehenden Ansprüche, **dadurch gekennzeichnet, dass** das Wischblatt (14) ein langgestrecktes Tragelement (16) aufweist und die mindestens erste Abstützfläche (54) und die mindestens ersten Rastmittel (68) so angeordnet sind, dass das Wischblatt (14) in einer Richtung montierbar ist, die mit der Längserstreckung des Tragelements (16) einen Winkel Delta einschließt, der von 0° verschieden ist.

4. Vorrichtung nach einem der vorhergehenden Ansprüche, **dadurch gekennzeichnet, dass** das Wischblatt (14) eine Halterung (92) aufweist mit Längsseiten (96), an denen die ersten Gelenkmittel (40) angeordnet sind, dass das Verbindungsstück (38) die Halterung (92) übergreift und mit Innenseiten (98) an den Längsseiten (96) zumindest bereichsweise anliegen kann.

5. Vorrichtung nach Anspruch 4, **dadurch gekennzeichnet, dass** zwischen den Innenseiten (98) und den ersten Rastmitteln (68) des Verbindungsstückes (38) ein Freiraum (100) verbleibt.

6. Vorrichtung nach einem der vorhergehenden Ansprüche, **dadurch gekennzeichnet, dass** das Verbindungsstück (38) dritte Rastmittel (102) aufweist, die von den ersten Rastmitteln (68) getrennt sind und die zweiten Gelenkmittel (42) umfassen.

7. Vorrichtung nach Anspruch 6, **dadurch gekennzeichnet, dass** die ersten Rastmittel (68) Anlaufschrägen (86) aufweisen, die bezogen auf das Verbindungsstück (38) nach außen weisen und die dritten Rastmittel (102) Anlaufschrägen (106) aufweisen, die bezogen in einen Innenraum des Verbindungsstückes (38) weisen.

8. Vorrichtung nach einem der vorhergehenden Ansprüche, **dadurch gekennzeichnet, dass** die mindestens erste Abstützfläche (54) eine Vertiefung (108) aufweist, in der die ersten Rastmittel (68) angeordnet sind.

9. Vorrichtung nach Anspruch 8, **dadurch gekennzeichnet, dass** in der Vertiefung (108) eine Nut (110) angeordnet ist, in deren Nutgrund die dritten Rastmittel (102) angeordnet sind.

10. Vorrichtung nach einem der Ansprüche 8 oder 9, **dadurch gekennzeichnet, dass** die ersten Gegenrastmittel (76) zumindest während der Montage des Wischblatts (14) und Wischerarms (12) passgenau durch die Vertiefung (108) führbar sind.

11. Vorrichtung nach einem der Ansprüche, **dadurch gekennzeichnet, dass** die mindestens erste Abstützfläche (54) in Richtung auf das Wischblatt (14) zu derart begrenzt ist, dass die Gegenrastmittel (76) darunter durchführbar sind.

12. Vorrichtung nach einem der vorhergehenden Ansprüche, **dadurch gekennzeichnet, dass** die zweiten Rastmittel (72) eine Hinterschneidung (116) aufweisen, die mit einer Schräge (118) der zweiten Gegenrastmittel (78) korrespondiert.

## Claims

1. Device for connecting a wiper blade (14) to a wiper arm (12), with the following features:
- a connecting element (38) can be arranged in an articulated manner on first articulation means (40) of the wiper blade (14),
- the connecting element (38) bears second articulation means (42) which correspond to the first articulation means (40),
- the connecting element (38) bears at least first and second supporting surfaces (54, 56) which correspond to at least first and second counter-supporting surfaces (60, 66) of the wiper arm (12),
- the at least one first supporting surface (54) is oriented at an angle alpha differing from 0° with respect to the at least second supporting surface (56),
- the connecting element (38) bears first and second latching means (68, 72) which correspond to first and second counter-latching means (76, 78) of the wiper arm (12),
- at least one first latching means (68) and/or first counter-latching means (76) are/is deflectable,
- at least one second latching means (72) and/or one second counter-latching means (78) are/is deflectable,
- the direction of deflection of the first latching means (68) and/or first counter-latching means (76) is at an angle beta of 90° with respect to the direction of deflection of the second latching means (72) and/or counter-latching means (78).

2. Device according to one of the preceding claims, **characterized in that** the fitting of the wiper blade (14) takes place in a fitting direction and the removal takes place in a removal direction which are at an angle gamma differing from 0° with respect to each other.

3. Device according to one of the preceding claims, **characterized in that** the wiper blade (14) has an elongate supporting element (16), and the at least first supporting surface (54) and the at least first latching means (68) are arranged in such a manner that the wiper blade (14) can be fitted in a direction which encloses an angle delta differing from 0° with the longitudinal extent of the supporting element (16).

4. Device according to one of the preceding claims, **characterized in that** the wiper blade (14) has a holder (92) with longitudinal sides (96) on which the first articulation means (40) are arranged, and **in that** the connecting element (38) engages over the holder (92) and, by means of inner sides (98), bears at least in regions against the longitudinal sides (96).

5. Device according to Claim 4, **characterized in that** a clearance (100) remains between the inner sides (98) and the first latching means (68) of the connecting element (38).

6. Device according to one of the preceding claims, **characterized in that** the connecting element (38) has third latching means (102) which are separate from the first latching means (68) and comprise the second articulation means (42).

7. Device according to Claim 6, **characterized in that** the first latching means (68) have run-on slopes (86) which point outward with respect to the connecting element (38), and the third latching means (102) have run-on slopes (106) which point into an interior of the connecting element (38) with respect thereto.

8. Device according to one of the preceding claims, **characterized in that** the at least first supporting surface (54) has a depression (108) in which the first latching means (68) are arranged.

9. Device according to Claim 8, **characterized in that** a groove (110) is arranged in the depression (108), and the third latching means (102) are arranged in the base of said groove.

10. Device according to either of Claims 8 and 9, **characterized in that**, at least during the fitting of the wiper blade (14) and wiper arm (12), the first counter-latching means (76) can be guided through the depression (108) in a precisely fitting manner.

11. Device according to one of the claims, **characterized in that** the at least first supporting surface (54) is restricted in the direction of the wiper blade (14) in such a manner that the counter-latching means (76) can be led through therebelow.

12. Device according to one of the preceding claims, **characterized in that** the second latching means (72) have an undercut (116) which corresponds to a slope (118) of the second counter-latching means (78).

## Revendications

1. Dispositif permettant de connecter un balai d'essuie-glace (14) à un bras d'essuie-glace (12), ayant les particularités suivantes :
- une pièce de liaison (38) peut être disposée de manière articulée sur des premiers moyens d'articulation (40) du balai d'essuie-glace (14),
- la pièce de liaison (38) porte des deuxièmes moyens d'articulation (42) correspondant aux premiers moyens d'articulation,
- la pièce de liaison (38) porte au moins des première et deuxième surfaces d'appui (54, 56) correspondant au moins à des première et deuxième contre-surfaces d'appui (60, 66) du bras d'essuie-glace (12),
- au moins la première surface d'appui (54) est orientée selon un angle alpha différent de 0° par rapport à au moins la deuxième surface d'appui (56),
- la pièce de liaison (38) porte des premiers et deuxièmes moyens d'encliquetage (68, 72) correspondant à des premiers et deuxièmes contre-moyens d'encliquetage (76, 78) du bras d'essuie-glace (12),
- au moins un premier moyen d'encliquetage (68) et/ou un premier contre-moyen d'encliquetage (76) peut/peuvent être dévié(s),
- au moins un deuxième moyen d'encliquetage (72) et/ou un deuxième contre-moyen d'encliquetage (78) peut/peuvent être dévié(s),
- la direction de déviation des premiers moyens d'encliquetage (68) ou des premiers contre-moyens d'encliquetage (76) est située selon un angle bêta de 90° par rapport à la direction de déviation des deuxièmes moyens d'encliquetage (72) ou des contre-moyens d'encliquetage (78).

2. Dispositif selon l'une quelconque des revendications précédentes, **caractérisé en ce que** le montage du balai d'essuie-glace (14) est effectué suivant une direction de montage, et le démontage est effectué suivant une direction de démontage qui sont situées selon un angle gamma différent de 0° l'une par rapport à l'autre.

3. Dispositif selon l'une quelconque des revendications précédentes, **caractérisé en ce que** le balai d'essuie-glace (14) présente un élément de support allongé (16) et au moins la première surface d'appui (54) et au moins les premiers moyens d'encliquetage (68) sont disposés de telle sorte que le balai d'essuie-glace (14) peut être monté dans une direction formant un angle delta différent de 0° avec l'extension longitudinale de l'élément de support (16).

4. Dispositif selon l'une quelconque des revendications précédentes, **caractérisé en ce que** le balai d'essuie-glace (14) présente une bride (92) avec des faces longitudinales (96) sur lesquelles sont disposés les premiers moyens d'articulation (40), **en ce que** la pièce de liaison (38) chevauche la bride (92) et peut par des surfaces intérieures (98) être adjacente aux faces longitudinales (96) au moins par endroits.

5. Dispositif selon la revendication 4, **caractérisé en ce qu'**il reste un espace libre (100) entre les faces intérieures (98) et les premiers moyens d'encliquetage (68) de la pièce de liaison (38).

6. Dispositif selon l'une quelconque des revendications précédentes, **caractérisé en ce que** la pièce de liaison (38) présente des troisièmes moyens d'encliquetage (102) qui sont séparés des premiers moyens d'encliquetage (68) et comprennent les deuxièmes moyens d'articulation (42).

7. Dispositif selon la revendication 6, **caractérisé en ce que** les premiers moyens d'encliquetage (68) présentent des biseaux d'arrêt (86) tournés vers l'extérieur par rapport à la pièce de liaison (38) et les troisièmes moyens d'encliquetage (102) présentent des biseaux d'arrêt (106) tournés vers l'intérieur de la pièce de liaison (38).

8. Dispositif selon l'une quelconque des revendications précédentes, **caractérisé en ce que** au moins la première surface d'appui (54) présente un creux (108) dans lequel sont disposés les premiers moyens d'encliquetage (68).

9. Dispositif selon la revendication 8, **caractérisé en ce que** dans le creux (108) est disposée une rainure (110) sur le fond de laquelle sont disposés les troisièmes moyens d'encliquetage (102).

10. Dispositif selon l'une quelconque des revendications 8 ou 9, **caractérisé en ce que** les premiers contre-moyens d'encliquetage (76) peuvent être guidés avec précision à travers le creux (108), au moins pendant le montage du balai d'essuie-glace (14) et du bras d'essuie-glace (12).

11. Dispositif selon l'une quelconque des revendications, **caractérisé en ce qu'**au moins la première surface d'appui (54) est limitée en direction du balai d'essuie-glace (14) de telle sorte qu'il est possible de faire passer les contre-moyens d'encliquetage (76) au-dessous de celle-ci.

12. Dispositif selon l'une quelconque des revendications précédentes, **caractérisé en ce que** les deuxièmes moyens d'encliquetage (72) présentent une contre-dépouille (116) correspondant à un biseau (118) des deuxièmes contre-moyens d'encliquetage (78).
